# EUROPEAN PATENT APPLICATION

(11) **EP 4 697 567 A1**
(43) Date of publication of application: **18.02.2026**
(21) Application number: 24194456.0
(22) Date of filing: 14.08.2024
(51) Int. Cl.: H02K 3/50, H02K 5/22, H02K 9/22, H02K 5/18

(54) **AXLE DRIVE PHASE CONNECTION BOX COOLING**

(71) Applicant: Schaeffler Technologies AG & Co. KG, 91074 Herzogenaurach (DE)
(72) Inventor: Stojkovic, Dragan, 80687 München (DE); Daun, Nico, 80687 München (DE)
(74) Representative: Schaeffler Technologies

(57) **Abstract**

The present invention relates to a thermal connection for an electric drive system (10), having at least one copper layer (38,42), at least one ceramic layer (40) in contact with the copper layer (38,42), a coil winding being part of the electric drive system (10), the coil winding having a plurality of wires (30a,30b), a hotspot located at an end winding of each of the plurality of wires (30a,30b), a busbar (34a) connected to each end winding in proximity to the hotspot, and a connection box housing (32), each end winding and the busbar (34a) located in the connection box housing (32). The copper layer (38,42) is in contact with each end winding in proximity to the hotspot, and the ceramic layer (40) is in contact with the connection box housing (32). A second copper layer (42) is in contact with the connection box housing (32) such that the ceramic layer (40) is disposed between the copper layer (38) and the second copper layer (42). The connection box housing (32) is part of a housing (46) of a reducer (14).

## Description

The invention relates generally to a thermal connection, which is part of an electric drive system, where the thermal connection reduces the temperature at the location of the connection between the end windings of one or more wires of a stator coil winding and a busbar.

A modern high-power density automotive electric drive system typically includes an e-machine, a reducer, and an inverter. The component of the axle drive are typically arranged in an engine compartment, and the phase connection box is usually placed in a separate housing within the reducer. An electric drive system must operate properly in different situations such as city, highway, uphill/downhill, or repeating acceleration/braking driving conditions. Therefore, at all times, the operating temperatures of the components of the electric drive system must be lower than the corresponding limiting temperatures of the components of the electric drive system, otherwise the corresponding derating would take place, limiting the performance of the electric drive system.

During the various operating conditions described above, one or more of the components of the electric drive system may experience an extreme temperature increase. One of these components is the connection between the end windings of one or more wires of the coil winding and a busbar. This connection is located in a phase connection box between the inverter and the electric machine. During assembly, the ends of one or more of the wires of the stator coil winding are welded to the busbar, such that the cross-sectional area of the end of each wire is reduced. This reduced cross-sectional area results in an increase in ohmic losses, and therefore significantly increases the localized temperature of the welding points during operation of the electric drive system. The area of the end of each wire having this increase in localized temperature is typically referred to as a "hotspot." As an example, this increase in temperature may be up to 35 °C higher compared to the average temperature of other portions of the stator coil winding. This increase in temperature also influences the choice in the plastic material used for the housing which surrounds the busbars.

One proposed solution to reduce the temperature of the portion of the stator end windings having the reduced cross-sectional area is to expose the phase connection box to direct oil cooling during the operation of the reducer. However, the problem of oil wetting (i.e., oil leaking into the e-machine or the inverter) within the electric machine and inverter housing would arise. Furthermore, possible chemical reaction between the oil and the coating material on the wires of the stator coil winding could also be an issue.

Therefore, there exists a need for reducing the temperature at the connection location (i.e., the hotspot) between the end windings of one or more wires of a stator coil winding and a busbar of an electric drive system.

It is therefore an object of the present invention to provide a thermal connection between the area of a hotspot of a wire, which is part of a stator end winding, and the housing of a phase connection box to achieve a temperature reduction, preventing the overheating of the hotspot.

This object may be achieved by the electric drive system having the thermal connection according to independent claim 1, and the method according to independent claim 8. Preferred embodiments are given in the dependent claims.

In an embodiment, the thermal connection of the present invention includes the use of the separate housing of the phase connection box located within the reducer housing, and the thermal connection includes the use of one or more layers of copper and ceramic plates to connect the areas of the hot spots (busbars, phase wires around the welding points...) to the housing of the phase connection box in order to provide conduction heat extraction from the hot spot.

The thermal connection of the present invention improves both continuous as well as peak performance of the electric drive system. Furthermore, the improved cooling reduces the temperatures of the hotspot, which also results in reducing the corresponding ohmic losses, increasing system efficiency.

The heat extraction from the housing of the phase connection box takes place through the interaction between the oil and the housing of the phase connection box. This heat transfer is dependent on both the oil temperature as well as the operating speed of the reducer. During operation, it is typical for the temperature of housing of the phase connection box to be similar to the temperature of the oil due to the oil splashing against the housing walls.

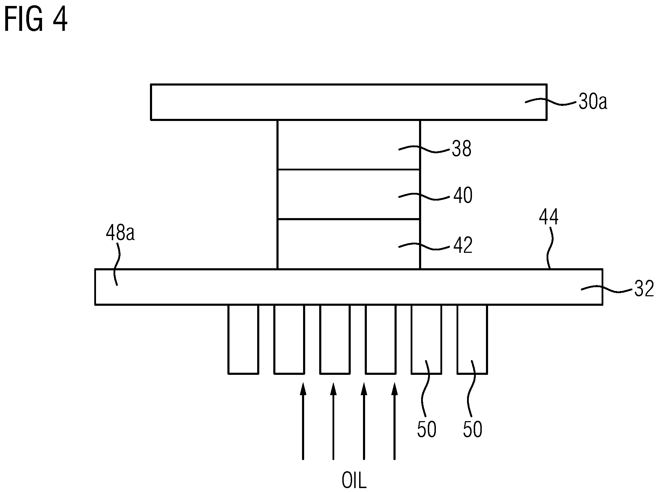

In an embodiment, the surface heat transfer area of the phase connection box in proximity to the hotspot may be increased through use of additional pins or ribs connected to the phase connection box, as shown in Fig. 4.

Without a solid connection between the hotspot of the stator end windings and the housing of the phase connection box, the connection between the stator end windings and the busbar is surrounded only by the air, and therefore the temperture of the hotspot cannot be substantially decreased during operation of the electric drive system, even as a result in changes in the temperture of the oil. Incorporating the use of the thermal connection of the present invention results in any change in the oil temperature having an immediate impact on the corresponding temperature of the hotspots due to the conductive heat transfer through the copper and ceramic plates.

In an embodiment, the influence of the forced air convection in the engine compartment may be used for additional reduction in the temperature of the phase connection box as a result of the corresponding decrease in temperature of the oil.

In an embodiment, the present invention is a thermal connection for an electric drive system, having at least one copper layer, at least one ceramic layer in contact with the copper layer, a coil winding being part of the electric drive system, the coil winding having a plurality of wires, a hotspot located at an end winding of each of the plurality of wires, a busbar connected to each end winding in proximity to the hotspot, and a connection box housing, each end winding and the busbar located in the connection box housing. The copper layer is in contact with each end winding in proximity to the hotspot, and the ceramic layer is in contact with the connection box housing.

In an embodiment, a second copper layer is in contact with the connection box housing such that the ceramic layer is disposed between the copper layer and the second copper layer.

In an embodiment, the connection box housing is part of a housing of a reducer of the electric drive system.

In an embodiment, one or more fins integrally formed as part of the connection box housing.

In an embodiment, a second thermal connection is in contact with the hotspot and a sidewall of the connection box housing.

In an embodiment, the connection box housing includes a first sidewall and a second sidewall on the opposite side of the connection box housing relative to the first sidewall. The first thermal connection is in contact with the first sidewall, and the second thermal connection is in contact with the second sidewall.

In an embodiment, each end winding is located at the end of a corresponding one of the plurality of wires.

In an embodiment, the present invention is a method for reducing temperature of a hotspot in a connection box housing of an electric drive system, including the steps of providing at least one thermal connection, providing a coil winding being part of the electric drive system, the coil winding having a plurality of wires, providing a hotspot located at an end winding of each of the plurality of wires, providing a busbar, the busbar connected to each end winding in proximity to the hotspot, and providing a connection box housing. In an embodiment, the method includes the steps of connecting each end winding to the busbar such that each end winding and part of the busbar are located in the connection box housing, and connecting the hotspot to the connection box housing via the at least one thermal connection, such that heat is transferred away from the hotspot through the thermal connection.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
- Fig. 1: is a diagram of an electric drive system having a thermal connection, according to embodiments of the present invention;
- Fig. 2: is an enlarged perspective view of several end windings of a stator, some of which are connected to a busbar, which are part of an electric drive system having a thermal connection, according to embodiments of the present invention;
- Fig. 3: is a diagram of a thermal connection between a hotspot and a connection box housing, according to embodiments of the present invention; and
- Fig. 4: is a diagram of an alternate embodiment of a thermal connection between a hotspot and a connection box housing, according to embodiments of the present invention.

The following description of the preferred embodiment(s) is merely exemplary in nature and is in no way intended to limit the invention, its application, or uses.

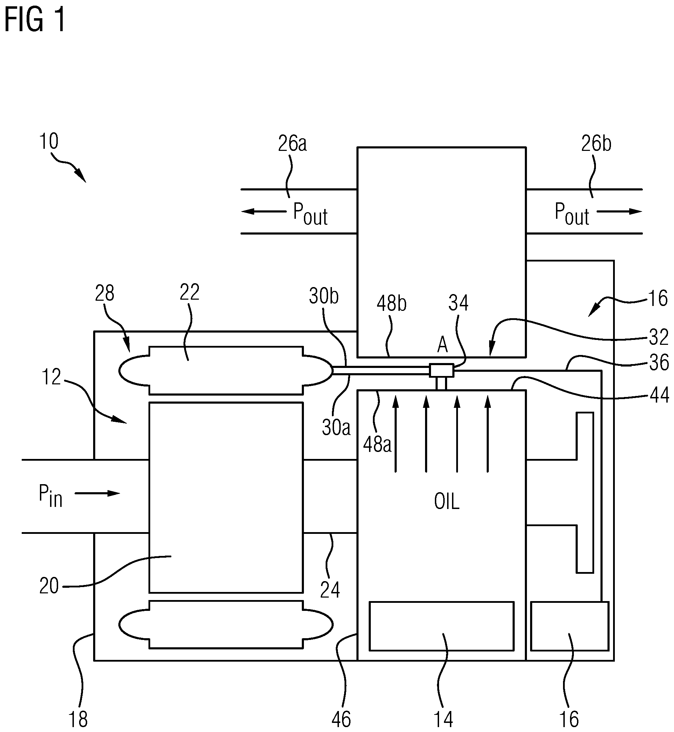

A diagram of an electric drive system having an embodiment of a thermal connection for a phase connection box is shown in Figure 1, generally at 10. The system 10 includes an electric motor, or e-machine, shown generally at 12, which is mechanically connected to a reducer, shown generally at 14. The e-machine 12 is also in electrical communication with an inverter, shown generally at 16. The e-machine 12 and the inverter 16 are disposed in a housing 18, and the reducer 14 is partially disposed in the housing 18.

The e-machine 12 includes a rotor 20 surrounded by a stator 22. The rotor 20 is mounted to a shaft 24, and the shaft 24 is connected to the reducer 14. The reducer 14 includes several gears (not shown) which are driven by the e-machine 12 via the shaft 24. The reducer 14 drives one or more output shafts 26a,26b.

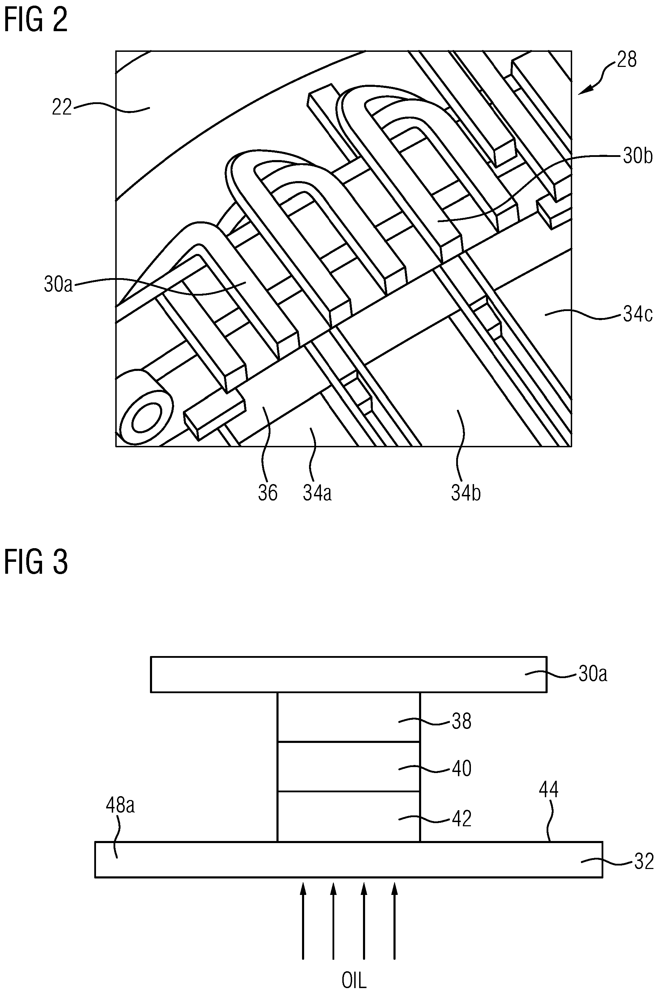

The e-machine 12 also includes coil windings which are connected to the stator 22. The coil windings are made up of individual wires 30a,30b and include a plurality of winding heads, shown generally at 28. One or more of the individual wires 30a,30b extend into a connection box housing, shown generally at 32, where the connection box housing 32 is part of the reducer 14. The end of each wire 30a,30b is referred to as an end winding, and each end winding is in electrical communication with the corresponding busbar, which in this embodiment is a first busbar 34a, where the first busbar 34a is in electrical communication with the inverter 16, as shown in Figs. 1 and 2. Each busbar 34a,34b,34c may be in electrical communication with the wires 30a,30b either through a direct connection, or through the use of a connecting element, or the like. It is also within the scope of the invention that the wires 30a,30b and/or other individual wires of the coil windings may be welded to the first busbar 34a or other busbars which are in electrical communication with the inverter 16. In the embodiment shown, the first busbar 34a is at least partially disposed in and supported by a busbar holder 36, where the busbar holder 36 also supports other busbars 34b,34c, as shown in Fig. 2. The wires 30a,30b, the first busbar 34a, and additional busbars 34b,34c function as a phase connection box, located inside the connection box housing 32.

The weld connections which connect the wires 30a,30b to the corresponding busbar (or connecting element), such as the first busbar 34a, are located at the end windings of the wires 30a,30b. During assembly, the welding process causes a reduction of the cross section of the end windings, which results in a temperature concentration, or "hotspot," during operation. The thermal connection of the present invention facilitates a reduction in temperature of the weld connections in the location of the hotspots of the end windings. The thermal connection includes a plurality of layers. Referring to Fig. 3, the first layer is a first copper layer 38, the second layer is a ceramic layer 40, and the third layer is a second copper layer 42. The first copper layer 38 is in contact with one or more of the copper wires 30a,30b in proximity to a hotspot (i.e., in proximity to the weld connection between the wires 30a,30b and the first busbar 34a). The ceramic layer 40 is connected to and disposed between the copper layers 38,42, and the second copper layer 42 is in contact with a surface 44 of the connection box housing 32.

Integrally formed with the housing 18 is a separate housing, or reducer housing 46. The reducer housing 46 encloses various components of the reducer 14, such that the reducer housing 46 is fluidically isolated from the rest of the components of the electric drive system 10. A fluid is disposed in the reducer housing 46 to provide lubrication to the gears of the reducer 14, and control the internal temperature of the reducer 14. As shown in Fig. 1, the connection box housing 32 is part of the reducer housing 46, such that the connection box housing 32 and the reducer housing 46 have at least one common side wall, and in the embodiment shown, have two common sidewalls 48a,48b, and the surface 44 is part of one of the sidewalls 48a.

During operation, the fluid in the reducer housing 46 is agitated and/or circulated such that the fluid comes into contact with the sidewall 48a, reducing the temperature of the sidewall 48a, and therefore also reduces the temperature of the copper layers 38,42 and the ceramic layer 40. The reduction in temperature of the copper layers 38,42 and the ceramic layer 40 also reduces the temperature of the hotspots, or locations of the weld connections at the end windings of the wires 30a,30b. The heat transfer is dependent upon the temperature of the fluid as well as the rotational speed of the gears of the reducer 14. Any change in the temperature of the fluid has an immidiate impact on the corresponding temperature of the hotspot due to conductive heat transfer through the copper layers 38,42 and the ceramic layer 40 as well as convective heat transfer between the oil and the connection box housing.

In another embodiment, a second thermal connection having a ceramic plate disposed between two copper plates may be used, where the first copper plate of the second thermal connection is in contact with one or more of the copper wires 30a,30b in proximity to a hotspot, and the second copper plate of the second thermal connection is in contact with the second sidewall 48b. In other embodiments, it is also possible where one or more of the thermal connections may include only two layers, such as one copper layer 38 and one ceramic layer 40.

Another embodiment of the invention is shown in Fig. 4, with like numbers referring to like elements. In this embodiment, several protrusions, or fins 50 are connected to the inner surface of the sidewall 48a, where the fins 50 are parallel to the gears in the reducer 14.

In another alternate embodiment, the influence of the forced air convection in an engine compartment may be used for additional reduction in temperature of the connection box housing through the corresponding temperature decrease of the oil.

The present invention is at least one thermal connection between the end windings of one or more wires 30a,30b and a sidewall 48a of a connection box housing 32, where each end winding is connected to a corresponding busbar, such as a first busbar 34a. The thermal connection includes a first copper layer 38 which is in contact with each end winding of the corresponding wires 30a,30b, a second copper layer 42 in contact with the sidewall 48a of the connection box housing 32, and a ceramic layer 40 disposed between and in contact with the first copper layer 38 and the second copper layer 42. Each end winding is in electrical communication with, and may be welded to, the corresponding busbar, such as a first busbar 34a. The cross-section of the end of the end winding is reduced during the welding process, resulting in the formation of a hotspot on the end winding during operation of the electric drive system. During operation of the electric drive system 10, the temperature of the end winding at the location of the hotspot is typically significantly higher than the rest of the coil windings. Heat is transferred away from the hotspot through the first copper layer 38, the ceramic layer 40, and the second copper layer 42.

The description of the invention is merely exemplary in nature and, thus, variations that do not depart from the gist of the invention are intended to be within the scope of the invention. Such variations are not to be regarded as a departure from the spirit and scope of the invention.

## Claims

1. A thermal connection for an electric drive system (10), comprising:
- at least one copper layer (38,42);
- at least one ceramic layer (40) in contact with the at least one copper layer (38,42);
- a coil winding being part of the electric drive system (10), the coil winding having a plurality of wires (30a,30b);
- a hotspot located at an end winding of each of the plurality of wires (30a,30b);
- a busbar (34a), the busbar (34a) connected to each end winding in proximity to the hotspot;
- a connection box housing (32), each end winding and the busbar (34a) located in the connection box housing (32);
- wherein the at least one copper layer (38,42) is in contact with each end winding in proximity to the hotspot, and the at least one ceramic layer (40) is in contact with the connection box housing (32).

2. The thermal connection for an electric drive system (10) of claim 1, the at least one copper layer (38,42) further comprising:
- a second copper layer (42) in contact with the connection box housing (32);
- wherein the at least one ceramic layer (40) is disposed between the at least one copper layer (38) and the second copper layer (42).

3. The thermal connection for an electric drive system (10) of one of the preceding claims, wherein the connection box housing (32) is part of a housing of a reducer (14) of the electric drive system (10).

4. The thermal connection for an electric drive system (10) of one of the preceding claims, further comprising one or more fins (50) integrally formed as part of the connection box housing (32).

5. The thermal connection for an electric drive system (10) of one of the preceding claims, further comprising a second thermal connection in contact with the hotspot and a sidewall (48b) of the connection box housing (32).

6. The thermal connection for an electric drive system (10) of one of the preceding claims, the connection box housing (32) further comprising:
a first sidewall (48a); and
a second sidewall (48b) on the opposite side of the connection box housing (32) relative to the first sidewall (48a);
wherein the first thermal connection is in contact with the first sidewall (48a), and the second thermal connection is in contact with the second sidewall (48b).

7. The thermal connection for an electric drive system (10) of one of the preceding claims, each end winding located at the end of a corresponding one of the plurality of wires (30a,30b).

8. A method for reducing temperature of a hotspot in a connection box housing (32) of an electric drive system (10), comprising the steps of:
- providing at least one thermal connection;
- providing a coil winding being part of the electric drive system (10), the coil winding having a plurality of wires (30a,30b);
- providing a hotspot located at an end winding of each of the plurality of wires (30a,30b);
- providing a busbar (34a), the busbar (34a) connected to each end winding in proximity to the hotspot;
- providing a connection box housing (32);
- connecting each end winding to the busbar (34a) such that each end winding and part of the busbar (34a) are located in the connection box housing (32);
- connecting the hotspot to the connection box housing (32) via the at least one thermal connection;
- transferring heat away from the hotspot through the at least one thermal connection.

9. The method of claim 8, further comprising the steps of:
- providing a first copper layer (38) which is part of the at least one thermal connection, the first copper layer (38) in contact with each end winding;
- providing a second copper layer (42) which is part of the at least one thermal connection, the second copper layer (42) in contact with the connection box housing (32); and
- providing a ceramic layer (40) which is part of the at least one thermal connection, the ceramic layer (40) disposed between the first copper layer (38) and the second copper layer (42);
- transferring heat way from the hotspot, through the first copper layer (38), the ceramic layer (40), the second copper layer (42), and to the connection box housing (32).

10. The method of one of the preceding claims, further comprising the steps of:
- one or more fins (50) integrally formed as part of the connection box housing (32);
- dissipating heat away from the connection box housing (32) through the one or more fins (50);

11. The method of one of the preceding claims, further comprising the steps of:
- providing a second thermal connection in contact with the hotspot and the connection box housing (32);
- transferring heat away from the second hotspot through the second thermal connection.
